# EUROPEAN PATENT SPECIFICATION

(11) **EP 3 717 443 B1**
(45) Date of publication and mention of the grant of the patent: **20.04.2022**
(21) Application number: 18815279.7
(22) Date of filing: 20.11.2018
(51) Int. Cl.: C05G 5/30, C05B 15/00, C05G 3/00, C05B 17/00, C05B 11/10, C05D 9/02, C05G 5/23

(54) **PHOSPHATIC FERTILIZERS BASED ON ALKANOLAMINE SALTS OF PHOSPHORIC ACID AND ALKANOLAMINE METAL COMPLEXES**
PHOSPHATDÜNGER AUF DER BASIS VON ALKANOLAMINSALZEN DER PHOSPHORSÄURE UND ALKANOLAMINMETALLKOMPLEXE
ENGRAIS PHOSPHATIQUES À BASE DE SELS D'ALCANOLAMINE D'ACIDE PHOSPHORIQUE ET DES COMPLEXES MÉTALLIQUES D'ALCANOLAMINES

(30) Priority: 01.12.2017 GB 201720083
(43) Date of publication of application: 07.10.2020
(73) Proprietor: Yara UK Limited, Grimsby, DE37 9TZ (GB)
(72) Inventor: WARD, Stuart, Europarc Grimsby DN37 9TZ (GB); BUTLER, Victoria, Europarc Grimsby DN37 9TZ (GB)
(74) Representative: Dummett Copp LLP
(86) International application number: PCT/GB2018/053355
(87) International publication number: WO 2019/106338

(56) References cited:
- WO-A1-2017/059895
- US-A- 2 222 735
- US-A- 4 332 609
- US-A- 5 910 323
- US-A1- 2004 031 303
- US-A1- 2007 227 399
- US-B1- 8 888 886
- DATABASE EPODOC [Online] EUROPEAN PATENT OFFICE, THE HAGUE, NL; 9 September 2002 (2002-09-09), "Method of obtaining a foliar fertilising agent containing a phosphorus compound, preferably orthophosphoric acid", XP002788243, Database accession no. PL-34622801-A & PL 195 176 B1 (KUBICZEK MARCIN [PL]; KAZIBUT JULIAN [PL]; WEGLARZ BARBARA [PL]) 31 August 2007 (2007-08-31)
- DATABASE WPI Week 197510 Thomson Scientific, London, GB; AN 1975-17033W XP002788244, & SU 424 848 A (CHEM INST AS UZBEK SSR) 10 October 1974 (1974-10-10) cited in the application

## Description

### Field of the Invention

The invention relates to the use of alkanolamine salts of phosphoric acid according to claim 11 and to aqueous compositions comprising mono-ethanolamine salts of phosphoric acid according to claim 1.

### Background

Plant nutrients can be divided into three main classes: primary or macronutrients, such as nitrogen (N), phosphorus (P) and potassium (K) ; secondary nutrients, such as calcium (Ca), magnesium (Mg), sulphur (S), and sodium (Na) ; and micronutrients, such as boron (B), copper (Cu), iron (Fe), manganese (Mn), molybdenum (Mo) and zinc (Zn). An adequate supply of these nutrients is required for healthy growth of plants and in modern agriculture, it is common practice to apply inorganic fertilizers to crops in order to improve yield and quality. Solid fertilizers such as prills or granules containing one or more of the primary nutrients (N, P and K) represent the most common type of fertilizer and are typically applied to the soil. However, liquid fertilizers are also available and are becoming increasingly important in many markets due to the benefits they offer the grower in terms of convenience, flexibility, accuracy of delivery, and ease of application. Liquid fertilisers containing primary, secondary and micronutrients, alone or in combination, are widely available and may be applied using a variety of methods such as spraying onto the soil, injection into the soil, banding, incorporation into the seedbed during drilling; in the irrigation water (via fertigation or hydroponics systems); by spray application onto the foliage of the crop (foliar application); or in seed treatment.

It is desirable for liquid fertilizers to be as concentrated as possible in order to minimize transport and storage costs, reduce packaging waste, improve productivity, and facilitate modern methods of application and dosing.

Phosphorus is one of the primary plant nutrients, hence phosphatic fertilizers (i.e. fertilizers containing phosphorus) represent a very important segment of the market. Typical phosphorus sources used in the production of solid granular fertilizer intended for application onto the soil include single superphosphate, triple superphosphate and dicalcium phosphate which are only partially soluble in water. For applications requiring the fertilizer to be fully dissolved, such as in fertigation, water soluble phosphate salts such as mono-ammonium phosphate (MAP), di-ammonium phosphate (DAP), mono-potassium phosphate (MKP) and di-potassium phosphate (DKP) are widely used, and liquid fertilizer products can be manufactured thereof.

A major disadvantage of the prior art liquid fertilizer products comprising phosphorus is that the concentration of phosphorus in aqueous compositions that can be achieved relatively low is. The Handbook of Chemistry and Physics 83^{rd} Edition lists the solubility at 25 °C of each of the aforementioned phosphates as follows:

| P-component | Formula | Solubility at 25 °C (g/100g water) | Theoretical P-content of saturated solution (expressed as P₂O₅, weight%)^{∗} |
|---|---|---|---|
| Ammonium hydrogen phosphate | (NH₄)₂HPO₄ | 69.5 | 22 |
| (di-ammonium phosphate, DAP) | (132 g/mol) | | |
| Ammonium dihydrogen phosphate (mono-ammonium phosphate, MAP) | (NH₄)H₂PO₄ | 40.4 | 17 |
| | (115 g/mol) | | |
| Potassium hydrogen phosphate (di-potassium phosphate, DKP) | K₂HPO₄ | 168 | 25 |
| | (174 g/mol) | | |
| Potassium dihydrogen phosphate (mono-potassium phosphate, MKP) | KH₂PO₄ | 25.0 | 10 |
| | (136 g/mol) | | |
| ^{∗} 1 g P = 2.29 g P₂0₅ | | | |

In practice, the concentrations will be further limited by relatively high crystallization temperatures of these aqueous solutions. If other nutrients were to be added to the aqueous solution, these may further reduce the P₂O₅ content that is achievable.

Another disadvantage of the water soluble phosphate salts such as mono-ammonium phosphate (MAP), di-ammonium phosphate (DAP), is that they also contain an amount of nitrogen in the form of ammonium. Therefore, it is impossible to produce ammonium-free phosphate containing fertilizers using the widely used MAP and/or DAP compounds and it is impossible to mix these compounds with nitrogen-containing compounds (e.g. in NPK fertilizers) without altering the N-content thereof.

Phosphoric acid is used as a P-fertilizer in some situations. The concentration of typical commercially available grades is 75 weight% which equates to a P₂O₅ content of 54 weight%. The freezing point of 75 weight% phosphoric acid is -20 °C, so this represents a very highly concentrated P source in a stable liquid form. However, the strongly acidic nature of phosphoric acid is problematic in many situations. For example, in foliar application, it can cause severe crop damage, it has poor compatibility with some other forms of nutrients and agrochemicals and its corrosive nature may damage equipment.

The prior art teaches the preparation and use of several alternative high concentration liquid phosphatic fertilizers. For example US 2,950,961 (Striplin et al., 1960), US 3,171,733 (Hignett et al., 1966), US 3,336,127 (Hignett et al., 1967) and US 3,464,808 (Kearnes et al., 1969) disclose methods for the preparation and use of ammonium polyphosphate. This material is now widely used in agriculture. Typical commercial grades of ammonium polyphosphate contain 10 weight% N and 34 weight% P₂O₅ (normally designated in the agricultural industry as a 10-34-0 grade) and have a crystallization point of < -20°C. As well as high concentration, ammonium polyphosphate is claimed to offer some agronomic advantages compared with orthophosphates. For example, it is less prone to lock-up in the soil and can sequester micronutrients. However, there are also some disadvantages. In long term storage it is possible for the polyphosphate to break down, resulting in sludge formation in holding tanks. Also in some situations, for example when faster uptake is required, it is agronomically more beneficial to have the P present in the primary orthophosphate ionic form (H₂PO₄⁻) which is the predominant form taken up by the plant. Alternatively, potassium polyphosphates have also been used in liquid fertilizers.

Methods for the preparation and use of liquid fertilizers based on urea phosphate are disclosed in US 3,022,153 (Miller, 1958), US 3,540,874 (Stinson, 1970), US 3,723,086 (Poynor et al., 1973) and GB1149924 (Keens, 1969). This type of fertilizer is a reaction product of urea and phosphoric acid which is highly soluble in water allowing liquid fertilizers with up to 28 weight% P₂O₅ to be produced. Urea phosphate is now widely used in agriculture. However, its strongly acidic and corrosive nature may limit its suitability in some situations.

US2213513 (Bancroft et al., 1940) discloses methods for the preparation and use of soluble organic phosphate fertilizer materials, based on alkyl phosphates. Even though these materials are reported to be soluble in water, the nutrient concentration achievable in a liquid form is rather low.

SU424848 A1 (Momot Institute of Chemistry of the Uzbek SSR, 1974) discloses the preparation of monoethanolamine salts of phosphoric acid by neutralisation of phosphoric acid solutions with gaseous ammonia and then with monoethanolamine. The resulting solution has a P-content (as P₂O₅) of 42 % and a N-content of 11.3 % (present as ammonia).

GB886504 A (Ferrari et al., 1962) discloses a process for the preparation of 2-aminoethylmonophosphate by dehydration of the mono-ethanolamine salt of ortho-phosphoric acid and its use as a fertilizer.

Whilst the materials and compositions discussed above are claimed to perform effectively, they all suffer from one or more significant drawbacks such as relatively low phosphorus content, poor crop safety or incompatibility with other nutrients or agrochemicals.

Hence, there is a need for improved liquid phosphatic fertilizer compositions which have a high phosphorus content, good crop safety and compatibility with other nutrients and agrochemicals.

PL346228 A1 (Kubiczek et al., 2002) discloses ammonium-free fertilizers comprising an alkanolamine salt of phosphoric acid, including a composition comprising 34.1 weight% of phosphoric acid and monoethanolamine.

US 2,222,735 (Bancroft et al, 1940) discloses compositions comprising phosphate rock and ethanolamines, such as diethanolamine, monoethanolamine and tributanolamine.

US 2007/0227399 A1 (Abou-Nemeh, 2007) discloses compositions for preserving wood that may comprise an ethanolamine phosphate metal complex, such as zinc ethanolamine posphate.

WO2017/059895 A1 (Dattilo and Menez, 2017) discloses a dietary composition that may comprise zinc ethanolamine phosphate.

US 4,332,609 (Ott, 1982) discloses a fertilizer composition comprising monoethanolamine polyborate.

### Summary of the Invention

Aspects of the invention are specified in the independent claims. Preferred features are specified in the dependent claims.

The present invention relates to the use of alkanolamine salts of phosphoric acid as an ammonium-free fertilizer. Such use has not been disclosed in the prior art. It has been discovered that such compounds have extremely high aqueous solubility and can therefore be formulated into stable solutions with very high P₂O₅ content. Furthermore, it has been demonstrated that such preparations have desirable agronomic properties such as excellent crop safety, efficient uptake and wide compatibility with other plant nutrient materials. Preferably, the use is the sole use as an ammonium-free fertilizer of the claimed compounds as an ammonium-free P-source in a particular application.

According to one embodiment, the alkanolamine is selected from the group of mono-, di- and tri-ethanolamine, mono-, di- and tri-isopropanolamine, and mixtures thereof. In particular, the alkanolamine is mono-ethanolamine.

The compounds according to the invention are prepared by contacting phosphoric acid with an alkanolamine in aqueous solution in molar ratios between 3:1 and 1:3, more preferably between 2:1 and 1:2.5, most preferably between 1:1 and 1:2. No water is removed, so esters are not expected to be formed. Therefore, the compounds according to the invention have the general formula alkanolamine.H₃PO₄.

In particular, the salts of mono-ethanolamine and phosphoric acid are prepared by contacting phosphoric acid with mono-ethanolamine (IUPAC name: 2-aminoethanol; CAS number 141-43-5; formula: NH₂CH₂CH₂OH) in aqueous solution in molar ratios between 3:1 and 1:3, more preferably between 2:1 and 1:2.5, most preferably between 1:1 and 1:2. The compounds according to the invention may have the general chemical formulae C₂H₁₀NO₅P and/or C₄H₁₇N₂O₆P. Preferably, the temperature of the aqueous solution comprising phosphoric acid and mono-ethanolamine is maintained below 50 °C during the production process.

According to one embodiment, the fertilizer is an aqueous fertilizer solution. Such aqueous fertilizer solution is a very stable solution of alkanolamine salts of phosphoric acid with very high P₂O₅ content. Typically, the P₂O₅ content of said aqueous fertilizer solution ranges from 5 to 40 weight% (w/w), relative to the total weight of the aqueous composition, more in particular from 10 to 40 weight% (w/w), more in particular from 20 to 40 weight% (w/w), most in particular from 30 to 40 weight% (w/w). In the definition of a range, the endpoints of a range are included.

According to one embodiment, the aqueous fertiliser solution is applied by spraying onto the soil, injecting into the soil, banding, incorporation into the seedbed during drilling, via fertigation or hydroponics systems, by foliar application, or by seed coating.

The present invention also relates to an aqueous composition, comprising an alkanolamine salt of phosphoric acid and at least an alkanolamine metal complex. Surprisingly, it was found that alkanolamines are good complex formers for micronutrients, such as boron (B), copper (Cu), iron (Fe) and zinc (Zn). The alkanolamine metal complexes are perfectly miscible and soluble in an aqueous composition comprising an alkanolamine salt of phosphoric acid, and hence, such a composition is a good vehicle to add said micronutrients to a fertilizer composition.

According to one embodiment, the alkanolamine of the alkanolamine metal complex is mono-ethanolamine.

According to one embodiment, the alkanolamine salt of phosphoric acid is mono-ethanolamine and the molar ratio of phosphoric acid and mono-ethanolamine of the mono-ethanolamine salt of phosphoric acid in the aqueous composition, comprising a mono-ethanolamine salt of phosphoric acid is between 3:1 and 1:3, more preferably 2:1 and 1:2.5, most preferably between 1:1 and 1:2. Preferably, such aqueous composition is essentially consisting of water, mono-ethanolamine salts of phosphoric acid and one or more alkanolamine metal complexes, preferably one or more mono-ethanolamine metal complexes.

It has been discovered that such aqueous composition may have an extremely high P₂O₅ content. Furthermore it has been demonstrated that such an aqueous composition has desirable agronomic properties such as excellent crop safety, efficient uptake and wide compatibility with other plant nutrient materials. Typically, the P₂O₅ content of said aqueous fertilizer solution ranges from 5 to 40 weight% (w/w), relative to the total weight of the aqueous composition, more in particular from 10 to 40 weight% (w/w), more in particular from 20 to 40 weight% (w/w), most in particular from 30 to 40 weight% (w/w). In the definition of a range, the endpoints of a range are included.

According to one embodiment, the alkanolamine metal complex is selected from the group of boron ethanolamine, copper ethanolamine, zinc ethanolamine and iron ethanolamine.

According to one embodiment, the aqueous composition may further comprise an ammonium-free nitrogen source and/or a potassium source, in particular wherein the nitrogen source is urea or a nitrate, and/or the potassium source is potassium nitrate or potassium sulphate.

According to one embodiment, the aqueous composition may further comprise one or more elements, selected from the group of calcium, magnesium, sulphur, sodium, boron, copper, iron, manganese, molybdenum and zinc. These elements are considered secondary nutrients and micronutrients. Surprisingly, it was found that such solutions were very stable, i.e. the secondary nutrients and micronutrients did not crystallize or form precipitates or sediments in a short time.

The aqueous composition is used as an ammonium-free fertilizer.

The invention will now be further described with reference to the following examples without being limited thereto.

### Experimental

### Example 1 : Phosphatic fertilizer containing 34 weight% P₂O₅ (not according to the invention)

The following example shows the formulation required to make 1 kg of a liquid phosphatic fertilizer containing 34 weight% P₂O₅, based on a mono-ethanolamine salt of phosphoric acid, produced in the molar ratio of 1 mole of mono-ethanolamine to 1 mole of phosphoric acid. The mono-ethanolamine used was a 90 weight% aqueous solution. The phosphoric acid used was a 75 weight% food grade with a P₂O₅ content of 54.3 weight%.

| | |
|---|---|
| Phosphoric acid 75% | 626.46 g |
| Mono-ethanolamine 90% | 325.38 g |
| Water | 48.16 g |
| Total | 1000.00 g |

The phosphoric acid was placed in a glass vessel fitted with a cooling jacket and impeller stirrer. Mono-ethanolamine was added slowly to the stirred acid, controlling the rate of addition in such a way as to maintain the temperature below 50 °C. After completing the mono- ethanolamine addition, stirring was continued whilst the solution was cooled to room temperature. Water was then added to adjust the batch weight to 1000 g. The resultant product was a clear, colourless, slightly viscous solution with the following physiochemical characteristics:

| | |
|---|---|
| P₂O₅ content: | 34 weight% |
| pH (neat product): | 4.3 |
| Crystallization point: | <-20°C |
| Density: | 1.426 kg/I |

The product remained stable for at least one year at room temperature.

It should be noted that a more concentrated product can be produced by omitting the water addition, using more concentrated acid and mono-ethanolamine solutions and allowing the heat of reaction to evaporate water from the reaction mixture.

Glasshouse trials were carried out in order to assess crop safety of the composition described above. The trials were carried out using a radish test crop grown in pots in a sand medium and fed via a nutrient solution. A randomised block design using 4 replicates was employed. The product was applied by foliar spraying at the 5 leaf growth stage using a rate equivalent to 10 kg/ha in 200 litres/ha water (equating to an input of 3.4 kg P₂O₅ per ha) . For comparison, treatments delivering the same input of P₂O₅ per ha in the form of ammonium polyphosphate, phosphoric acid, mono-ammonium phosphate, mono-potassium phosphate and potassium pyrophosphate were also carried out. The crop was assessed for symptoms of phytotoxicity seven days after spraying.

The only treatment showing signs of crop damage (leaf burn) was the one using phosphoric acid. The trial thus demonstrates the safety of the product based on the mono-ethanolamine salt of phosphoric acid.

Further glasshouse trials were carried out in order to efficacy of the composition described above in comparison with traditional P sources (phosphoric acid and potassium polyphosphate). The trials were carried out using a tomato test crop grown in pots in a mixed sand/calcareous soil medium using 6 replicates. Nutrients were applied via a fertigation system; in each case, 31 mg/l P₂O₅ was delivered on the irrigation water in each different form. The trial was conducted for a period of 6 weeks and the following parameters assessed: number of flowers and fruit set; nutrient status; root fresh and dry matter.

### Example 2 : Phosphatic fertilizer containing 21 weight% P₂O₅ (not according to the invention)

The following example shows the formulation required to make 1 kg of a liquid phosphatic fertilizer containing 21 weight% P₂O₅ based on a mono-ethanolamine salt of phosphoric acid reacted in the molar ratio of 2 mole of mono-ethanolamine to 1 mole of phosphoric acid. The mono-ethanolamine used was a 90 weight% aqueous solution. The phosphoric acid used was 75 weight% food grade with a P₂O₅ content of 54.3 weight%.

| | |
|---|---|
| Phosphoric acid 75% | 391.98 g |
| Mono-ethanolamine 90% | 407.20 g |
| Water | 200.82 g |
| Total | 1000.00 g |

The phosphoric acid was placed in a glass vessel fitted with a cooling jacket and impeller stirrer. Mono-ethanolamine was added slowly to the stirred acid, controlling the rate of addition in such a way as to maintain the temperature below 50 °C. After completing the mono-ethanolamine addition, stirring was continued whilst the solution was cooled to room temperature. Water was then added to adjust the batch weight to 1000 g. The resultant product was a clear, slightly yellowish, slightly viscous solution with the following physiochemical characteristics:

| | |
|---|---|
| P₂O₅ content: | 21 weight% |
| pH (neat product): | 8.5 |
| Crystallization point: | <-10°C |
| Density: | 1.329 kg/I |

The product remained stable for at least one year at room temperature.

### Example 3 : Phosphatic fertilizer containing 100 g/l P₂O₅ and 100 g/l boron (B).

The following example describes the process to make 1 litre of a mixed liquid fertilizer containing the primary plant nutrient phosphorus plus the micronutrient boron. The nutrient content of the final product is 100 g/l P₂O₅ and 100 g/l boron (B). The phosphatic component of the fertilizer is based on a mono-ethanolamine salt of phosphoric acid reacted in the molar ratio 1.779 mole of mono-ethanolamine to 1 mole of phosphoric acid. The mono-ethanolamine used was a 90 weight% aqueous solution. The phosphoric acid used was 75 weight% food grade with a P₂O₅ content of 54.3 weight%. The boron component of the fertilizer is a compound formed by reaction of mono-ethanolamine with boric acid in the mole ratio 1:3 (commonly referred to in the fertilizer industry as "boron ethanolamine" being a boron-ethanolamine complex).

| | |
|---|---|
| Water | 92.39 g |
| Boron ethanolamine | 902.06 g |
| Mono-ethanolamine 90% | 170.25 g |
| Phosphoric acid 75% | 184.30 g |
| Total | 1349.00 g |

The water and boron ethanolamine were placed in a glass vessel fitted with an impeller stirrer. Mono-ethanolamine was added to the stirred mixture, followed by the phosphoric acid. The reaction was mildly exothermic and after addition of all the reactants, stirring was continued for 30 minutes. Water was then added to adjust the batch volume to 1 litre. The resultant product was a clear, virtually colourless, slightly viscous solution with the following physiochemical characteristics:

| | |
|---|---|
| pH (neat product): | 8.2 |
| Crystallization point: | <-5°C |
| Density: | 1.349kg/l |

The product remained stable at room temperature without any sedimentation for at least one year.

The same product may also be produced by making the boron ethanolamine component "in situ" in the same reaction vessel by reacting mono-ethanolamine and boric acid in the required proportions before the phosphate salt is formed.

Surprisingly, attempts to produce an equivalent fertilizer composition using conventional phosphate sources proved unsuccessful. Using mono-potassium phosphate, di-potassium phosphate, tetrapotassium pyrophosphate, potassium tripolyphosphate, mono-ammonium phosphate, di-ammonium phosphate or ammonium polyphosphate as the P source to achieve the aforementioned nutrient content of 100g/l P₂O₅ and 100g/l boron (B) resulted in products that crystallized or formed precipitates or sediments in a short time. This demonstrates the superior compatibility of the phosphatic component based on mono-ethanolamine salts of phosphoric acid which allows flexibility in formulation of complex plant nutrient compositions.

Glasshouse trials were carried out in order to assess the efficacy of the phosphorus/boron composition described above when foliar sprayed on to a crop. The trials were carried out using a sunflower test crop grown in pots in a sand medium and fed via a nutrient solution (without boron). A randomised block design using 4 replicates was employed. Details of the treatments are listed below:
- Treatment 1:: Nil (Control)
- Treatment 2:: 3 l/ha phosphatic fertilizer according to the invention in 200l/ha water applied at 4 leaf stage
- Treatment 3:: 4.5 l/ha phosphatic fertilizer according to the invention in 200l/ha water applied at 4 leaf stage
- Treatment 4:: 3 l/ha phosphatic fertilizer according to the invention in 200l/ha water applied at 4 leaf stage + 3 l/ha in 200l/ha water 14 days later

The crop was harvested 8 weeks after the second foliar application and plant height, fresh plant weight, dry head weight and dry seed weight were measured. The results are shown in the table below:

| **Treatment Number** | **Average Plant Height (cm)** | **Std Dev** | **Average Fresh Plant Weight (g)** | **Std Dev** | **Average Dry Head Weight (g)** | **Std Dev** | **Average Dry Seed Weight (g)** | **Std Dev** |
|---|---|---|---|---|---|---|---|---|
| 1 | 44.50 | 8.81 | 74.05 | 28.05 | 8.30 | 2.77 | 0.08 | 0.08 |
| 2 | 49.25 | 10.66 | 233.64 | 52.45 | 28.67 | 3.58 | 4.50 | 3.44 |
| 3 | 47.50 | 7.77 | 241.81 | 42.86 | 34.43 | 5.25 | 10.98 | 2.48 |
| 4 | 51.75 | 3.10 | 191.55 | 36.79 | 27.61 | 3.92 | 8.11 | 3.70 |

Treatments 2, 3 and 4 all showed significant increases in average fresh plant weight, average dry head weight and average dry seed weight compared to the untreated control thus demonstrating the agronomic efficacy of the composition.

## Claims

1. An aqueous composition for use as an ammonium-free fertilizer comprising an alkanolamine salt of phosphoric acid and at least an alkanolamine metal complex, wherein the at least an alkanolamine metal complex is not a metal alkanolamine phosphate complex selected from the group of zinc ethanolamine phosphate complex, manganese ethanolamine phosphate complex, iron ethanolamine phosphate complex, chromium ethanolamine phosphate complex and calcium ethanolamine phosphate complex.

2. Aqueous composition according to claim 1, wherein the alkanolamine of the alkanolamine metal complex is mono-ethanolamine.

3. Aqueous composition according to any one of claims 1 to 2, wherein the alkanolamine salt of phosphoric acid is selected from the group of mono-, di- and tri-ethanolamine, mono-, di- and tri-isopropanolamine, and mixtures thereof.

4. Aqueous composition according to any one of claims 1 to 3, wherein the alkanolamine salt of phosphoric acid is mono-ethanolamine.

5. Aqueous composition according to claim 4, wherein the molar ratio of phosphoric acid and mono-ethanolamine of the mono-ethanolamine salt of phosphoric acid is between 3:1 and 1:3, more preferably 2:1 and 1:2.5, most preferably between 1:1 and 1:2.

6. Aqueous composition according to any one of claims 1 to 5, wherein the P₂O₅ content of the composition ranges from 5 to 40 weight% (w/w), relative to the total weight of the aqueous composition.

7. Aqueous composition according to any one of claims 1 to 6, wherein the alkanolamine metal complex is selected from the group of boron ethanolamine, copper ethanolamine, zinc ethanolamine and iron ethanolamine.

8. Aqueous composition according to any one of claims 1 to 7, further comprising an ammonium-free nitrogen source and/or a potassium source.

9. Aqueous composition according to claim 8, wherein the nitrogen source is urea or a nitrate compound, and/or the potassium source is potassium nitrate or potassium sulphate.

10. Aqueous composition according to any one of claims 1 to 9, further comprising one or more elements, selected from the group of calcium, magnesium, sulphur, sodium, boron, copper, iron, manganese, molybdenum and zinc.

11. Use of the aqueous composition defined in any one of claims 1 to 10 as an ammonium free fertilizer.

12. Use according to claim 11, wherein the aqueous composition is applied by spraying onto the soil, injecting into the soil, banding, incorporation into the seedbed during drilling, via fertigation or hydroponics systems, by foliar application, or by seed coating.

## Patentansprüche

1. Wässrige Zusammensetzung zur Verwendung als ammoniumfreier Dünger mit einem Alkanolaminsalz der Phosphorsäure und mindestens einem Alkanolaminmetallkomplex, wobei der mindestens eine Alkanolaminmetallkomplex kein Alkanolaminphosphat-Metallkomplex aus der Gruppe Ethanolaminphosphat-Zinkkomplex, Ethanolaminphosphat-Mangankomplex, Ethanolaminphosphat-Eisenkomplex, Ethanolaminphosphat-Chromkomplex und Ethanolaminphosphat-Calciumkomplex ist.

2. Wässrige Zusammensetzung nach Anspruch 1, wobei es sich bei dem Alkanolamin des Alkanolaminmetallkomplexes um Monoethanolamin handelt.

3. Wässrige Zusammensetzung nach einem der Ansprüche 1 bis 2, wobei das Alkanolaminsalz der Phosphorsäure aus der Gruppe von Mono-, Di- und Triethanolamin, Mono-, Di- und Triisopropanolamin und Mischungen davon ausgewählt ist.

4. Wässrige Zusammensetzung nach einem der Ansprüche 1 bis 3, wobei es sich bei dem Alkanolaminsalz der Phosphorsäure um Monoethanolamin handelt.

5. Wässrige Zusammensetzung nach Anspruch 4, wobei das Molverhältnis von Phosphorsäure und Monoethanolamin des Monoethanolaminsalzes der Phosphorsäure zwischen 3:1 und 1:3, mehr bevorzugt zwischen 2:1 und 1:2,5 und am meisten bevorzugt zwischen 1:1 und 1:2 liegt.

6. Wässrige Zusammensetzung nach einem der Ansprüche 1 bis 5, wobei der P₂O₅-Gehalt der Zusammensetzung im Bereich von 5 bis 40 Gew.-% (w/w) liegt, bezogen auf das Gesamtgewicht der wässrigen Zusammensetzung.

7. Wässrige Zusammensetzung nach einem der Ansprüche 1 bis 6, wobei der Alkanolaminmetallkomplex aus der Gruppe von Borethanolamin, Kupferethanolamin, Zinkethanolamin und Eisenethanolamin ausgewählt ist.

8. Wässrige Zusammensetzung nach einem der Ansprüche 1 bis 7, ferner aufweisend eine ammoniumfreie Stickstoffquelle und/oder eine Kaliumquelle.

9. Wässrige Zusammensetzung nach Anspruch 8, wobei die Stickstoffquelle Harnstoff oder eine Nitratverbindung ist und/oder die Kaliumquelle Kaliumnitrat oder Kaliumsulfat ist.

10. Wässrige Zusammensetzung nach einem der Ansprüche 1 bis 9, ferner aufweisend ein oder mehrere Elemente, die aus der Gruppe von Calcium, Magnesium, Schwefel, Natrium, Bor, Kupfer, Eisen, Mangan, Molybdän und Zink ausgewählt sind.

11. Verwendung der wässrigen Zusammensetzung nach einem der Ansprüche 1 bis 10 als ammoniumfreier Dünger.

12. Verwendung nach Anspruch 11, wobei die wässrige Zusammensetzung durch Aufsprühen auf den Boden, Einspritzen in den Boden, Bänderung, Einbringen in das Saatbeet während des Bohrens, über Fertigations- oder Hydrokultursysteme, durch Blattapplikation oder durch Samenbeschichtung aufgebracht wird.

## Revendications

1. - Composition aqueuse destinée à être utilisée comme engrais sans ammonium, comprenant un sel d'alcanolamine d'acide phosphorique et au moins un complexe métallique d'alcanolamine, dans laquelle ledit au moins un complexe métallique d'alcanolamine n'est pas un complexe métal alcanolamine phosphate choisi dans le groupe du complexe zinc éthanolamine phosphate, du complexe manganèse éthanolamine phosphate, du complexe fer éthanolamine phosphate, du complexe chrome éthanolamine hosphate et du complexe calcium éthanolamine phosphate.

2. - Composition aqueuse selon la revendication 1, dans laquelle l'alcanolamine du complexe métallique d'alcanolamine est la mono-éthanolamine.

3. - Composition aqueuse selon l'une quelconque des revendications 1 et 2, dans laquelle le sel d'alcanolamine d'acide phosphorique est choisi dans le groupe de la mono-, di- et tri-éthanolamine, de la mono-, di- et tri-isopropanolamine, et de leurs mélanges.

4. - Composition aqueuse selon l'une quelconque des revendications 1 à 3, dans laquelle le sel d'alcanolamine d'acide phosphorique est de mono-éthanolamine.

5. - Composition aqueuse selon la revendication 4, dans laquelle le rapport molaire d'acide phosphorique et de mono-éthanolamine du sel de mono-éthanolamine d'acide phosphorique est entre 3:1 et 1:3, de façon davantage préférée entre 2:1 et 1:2,5, de la façon que l'on préfère plus entre 1:1 et 1:2.

6. - Composition aqueuse selon l'une quelconque des revendications 1 à 5, dans laquelle la teneur en P₂O₅ de la composition se situe dans la plage de 5 à 40 % en poids (p/p), par rapport au poids total de la composition aqueuse.

7. - Composition aqueuse selon l'une quelconque des revendications 1 à 6, dans laquelle le complexe métallique d'alcanolamine est choisi dans le groupe du bore éthanolamine, du cuivre éthanolamine, du zinc éthanolamine et du fer éthanolamine.

8. - Composition aqueuse selon l'une quelconque des revendications 1 à 7, comprenant en outre une source d'azote sans ammonium et/ou une source de potassium.

9. - Composition aqueuse selon la revendication 8, dans laquelle la source d'azote est l'urée ou un composé nitrate, et/ou la source de potassium est le nitrate de potassium ou le sulfate de potassium.

10. - Composition aqueuse selon l'une quelconque des revendications 1 à 9, comprenant en outre un ou plusieurs éléments, choisis dans le groupe du calcium, magnésium, soufre, sodium, bore, cuivre, fer, manganèse, molybdène et zinc.

11. - Utilisation de la composition aqueuse définie dans l'une quelconque des revendications 1 à 10 comme engrais sans ammonium.

12. - Utilisation selon la revendication 11, dans laquelle la composition aqueuse est appliquée par pulvérisation sur le sol, par injection dans le sol, par épandage en bandes, par incorporation dans le lit de semences pendant le forage, par l'intermédiaire de systèmes de fertigation ou hydroponiques, par application foliaire, ou par enrobage de semences.
